# FASCICULE DE BREVET EUROPEEN

(11) **EP 1 348 279 B1**
(45) Date de publication et mention de la délivrance du brevet: **23.02.2005**
(21) Numéro de dépôt: 01999075.3
(22) Date de dépôt: 27.11.2001
(51) Int. Cl.: H04L 9/08, H04N 7/167

(54) **CERTIFICATION DES TRANSACTIONS**
TRANSAKTIONSZERTIFIZIERUNG
TRANSACTION CERTIFICATION

(30) Priorité: 28.11.2000 CH 230800
(43) Date de publication de la demande: 01.10.2003
(73) Titulaire: Nagravision SA, 1033 Cheseaux-sur-Lausanne (CH)
(72) Inventeur: STRANSKY, Philippe, 1033 Cheseaux-sur-Lausanne (CH)
(74) Mandataire: Wenger, Joel-Théophile
(86) Numéro de dépôt international: PCT/IB2001/002269
(87) Numéro de publication internationale: WO 2002/045336

(56) Documents cités:
- EP-A- 0 735 721
- WO-A-00/69113
- KENT S: "Privacy Enhancement for Internet Electronic Mail: Part II: Certificate-Based Key Management (URL)" XP002058728 alinéa [0002]
- GEHRKE M ET AL: "Management of a public key certification infrastructure -- Experiences from the DeTeBerkom project BMSec" COMPUTER NETWORKS AND ISDN SYSTEMS,NL,NORTH HOLLAND PUBLISHING. AMSTERDAM, vol. 28, no. 14, 1 novembre 1996 (1996-11-01), pages 1901-1914, XP004014501 ISSN: 0169-7552

## Description

La présente invention concerne le domaine des transactions sécurisées, en particulier dans le domaine de la télévision à péage.

Avec le développement du trafic sur des réseaux ouverts tel qu'internet, il est vite apparu le besoin de pouvoir identifier d'une manière certaine, l'interlocuteur avec lequel l'on est en train de dialoguer, et de rendre incompréhensibles les données échangées entre deux entités.

C'est pourquoi les programmes permettant de naviguer sur le web intègrent un module d'encryptage, de type SSL, afin d'encrypter les données émises depuis un utilisateur vers un centre de traitement.

Dans ce type de configuration, le centre de traitement envoie un certificat à destination de l'utilisateur, ce certificat contenant la clé publique du centre. Une fois ce certificat reçu, les données envoyées par l'utilisateur sont encryptées par la clé publique et envoyées vers le centre. Il n'est alors possible de décrypter ces données uniquement avec la clé privée du centre, clé gardée secrètement dans le centre.

Il faut immédiatement remarquer que ce système souffre d'un premier inconvénient qui est de ne sécuriser que les données dans un sens. Le centre n'a aucune garantie que l'utilisateur est bien celui qu'il prétend être.

L'autre inconvénient est que le certificat envoyé par le centre peut être détourné par un tiers pour le remplacer par le sien. C'est le scénario bien connu du "man in the middle". Toutes les données envoyées par l'utilisateur sont alors décryptée par la clé privée du tiers pour ensuite être encryptées par la clé publique du centre. Le centre comme l'utilisateur ne verront aucunement cette intrusion alors que toutes les données envoyées par l'utilisateur seront piratées par le tiers.

Dans une configuration à identification mutuelle, les deux interlocuteurs possèdent un certificat avec clé publique et clé privée. Pour disposer d'un certificat, il existe plusieurs méthodes dont voici deux exemples:
- l'utilisateur s'adresse via internet à un organisme gérant des certificats qui après avoir recueilli quelques données personnelles, envoie le certificat dans la boîte aux lettres électronique de l'utilisateur. Il faut mentionner qu'à ce stade, ce certificat contient la clé privée et la clé publique.
- l'utilisateur se présente en personne auprès de l'organisme gérant les certificats et présente une pièce d'identité. Il reçoit une disquette contenant le certificat pour l'installer sur son ordinateur.

Si la première méthode a l'avantage de la simplicité, elle ne garantit pas une sécurité de haut niveau.

La deuxième méthode par contre présente toutes les garanties de sécurité mais décourage nombre d'utilisateurs aux vues des démarches nécessaires.

La présente invention a pour but de générer et distribuer des certificats d'une manière sûre, sans contrainte pour l'utilisateur et en garantissant les données identitaires du destinataire.

Ce but est atteint par une méthode de distribution des clés asymétriques publique et privée entre un centre de génération de clés et au moins une unité d'utilisateur, ladite unité comprenant un module de sécurité, ladite méthode consistant à générer des certificats comprenant une clé publique et une clé privée, encrypter par une clé de transport ces certificats, et les transmettre à destination du module de sécurité d'un utilisateur connu, ledit module comprenant la clé de transport pour décrypter le certificat.

L'utilisation d'un module de sécurité éprouvé tel que la carte à puce d'un utilisateur permet d'éviter plusieurs échanges pour la création dynamique d'une clé de transfert.

Ces modules de sécurité disposent de moyens cryptographiques et de clés dans des zones sécurisées garantissant le secret de la clé privée en particulier.

En effet, selon les solutions connues, les diverses clés sont généralement stockées dans la mémoire de masse de l'ordinateur ce qui constitue un risque de piratage.

Le système de l'invention s'étend également à la génération sécurisée des certificats. Le but que poursuit ce système est d'éviter de disposer des clés en clair dans le processus de génération, tout en conservant des temps de livraison courts pour satisfaire une large demande.

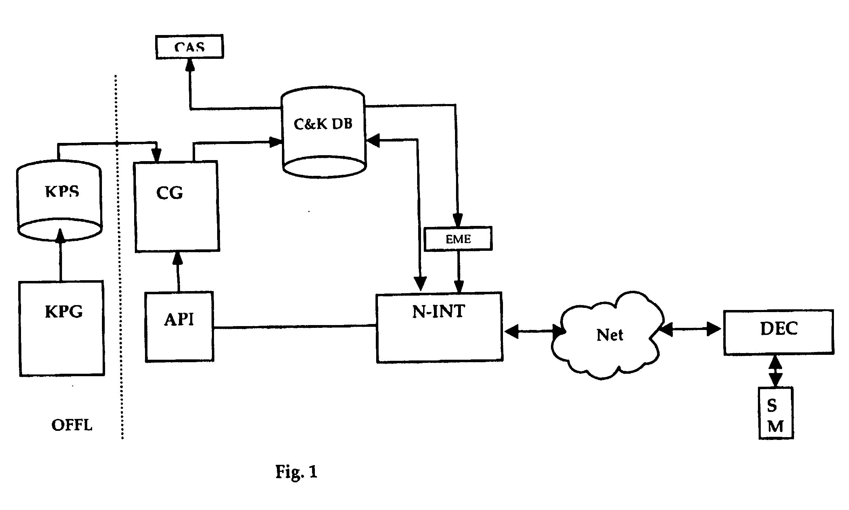

L'invention sera mieux comprise grâce à la description détaillée qui va suivre en se référant a la figure unique annexée qui décrit la configuration du système de génération des certificats et clés privées selon l'invention.

Sur cette figure sont représentés en schéma bloc les différents modules en charge de la génération des certificats et clés. La génération proprement dite du couple clé privée et clé publique est effectuée dans le module KPG selon une technique connue en soi. Un tel module est décrit dans la demande PCT/IB00/01589 et est basée sur l'utilisation d'un grand nombre d'unités de sécurité fonctionnant en parallèle. Une fois générées, les clés sont directement encryptées dans ce même module par une clé de service du système et transmises sous cette forme à la base de données des clés KPS. Cette clé de service sert à encrypter ou décrypter des données stockées localement dès lors que ces données confidentielles sortent du module de sécurité.

Cette étape est importante du fait que la génération d'une paire de clés prend plusieurs secondes et que la génération en-ligne (à la demande) est alors trop lente pour satisfaire les utilisateurs. C'est pourquoi les paires de clés sont générées et stockées dans la base de données KPS pour disponibilité future.

La partie à gauche de la ligne OFFL concerne la génération des clés en mode hors-ligne.

Sur requête d'un utilisateur, les clés encryptées sont envoyées au module de génération de certificat CG, certificat qui contient la clé publique. La clé privée, toujours sous forme encryptée, ainsi que le certificat sont stockés dans la base de données C&K DB. Avant l'envoi de la clé privée, elle est préalablement décryptée par la clé de service du système et encryptée par la clé de transmission du module de sécurité de l'utilisateur. Cette clé peut soit être une clé secrète symétrique, soit être la clé publique du module de sécurité. Cette étape se fait à l'intérieur d'un module de sécurité à haut débit cryptographique selon l'architecture décrite dans le PCT/IB00/01589.

Pour identification future, le certificat du centre de gestion peut également être transmis.

La clé privée encryptée ainsi que son certificat sont transmis à l'utilisateur final par des moyens usuels par l'interface réseau N-INT sur le réseau Net.

Dans les applications de télévision à péage, il est possible d'utiliser les modalités de transmission standard de gestion des abonnés représentées par le module CAS (Conditional Access Systeml).

La transmission d'un tel certificat peut se faire soit sur l'initiative du centre, soit à l'initiative de l'unité d'utilisateur.

L'unité de l'utilisateur DEC n'est pas considérée comme suffisamment sûre pour contenir la clé privée. C'est pourquoi cette dernière est envoyée, toujours sous forme encryptée, au module de sécurité SM qui seul peut décrypter ce message. La clé privée est alors stockée dans la mémoire protégée de ce module, qui a généralement la forme d'une carte à puce. Le certificat, de taille plus importante, est généralement mémorisé dans le décodeur puisqu'il ne contient pas de données confidentielles.

Lors d'une transaction initiée par l'utilisateur, la signature est préparée dans le module de sécurité grâce à la clé privée. Cette clé n'est à aucun moment accessible hors du module de sécurité.

Selon une forme de réalisation, le certificat et la signature sont envoyés à destination du centre de gestion. Celui-ci accède à la base de données des certificats C&K DB pour vérifier l'authenticité du certificat et utiliser la clé publique de l'utilisateur pour décrypter la signature. En retour, le centre envoie son certificat avec sa signature. Pour former cette dernière, le centre utilise sa clé privée stockée dans la même base de données C&K DB sous forme encryptée. La clé est transmise au module de signature EME qui est du type sécurisé. La clé est alors décryptée dans ce module pour composer la signature.

La signature et le certificat sont ensuite envoyés à destination de l'unité de l'utilisateur. Le certificat du centre transmis lors de l'établissement de la clé privé de l'utilisateur est alors utilisé pour décrypter et vérifier la signature.

L'authentification est alors assurée des deux côtés.

Selon une variante de l'invention, la clé publique du centre est conservée dans le module de sécurité de l'utilisateur afin que l'on ne puisse pas modifier ce critère important d'identification.

## Revendications

1. Méthode de production et de distribution des clés asymétriques publique et privée entre un centre de génération de clés et au moins une unité d'utilisateur (DEC), ladite unité comprenant un module de sécurité (SM), ladite méthode consistant à :
- générer des certificats comprenant une clé publique et une clé privée dans une première unité cryptographique (KPG),
- encrypter par une clé de service, la clé privée dans la première unité cryptographique (KPG) et la stocker dans une mémoire de clés (KPS),
- lors de l'envoi des clés à une unité d'utilisateur, extraire les clés de la mémoire de clés (KPS), composer le certificat avec la clé publique,
- décrypter la clé privée correspondante par la clé de service dans un module de sécurité cryptographique et l'encrypter avec une clé de transport propre à l'utilisateur,
- transmettre la clé privée encryptée et le certificat à destination de l'utilisateur.

2. Méthode selon la revendication 1, **caractérisée en ce que** la clé privée encryptée est reçue par l'unité d'utilisateur (DEC) et transmise au module de sécurité (SM) contenant la clé de transport pour décrypter et stocker la clé privée.

3. Méthode selon la revendication 1, **caractérisée en ce qu'**elle consiste à utiliser plusieurs modules cryptographiques monolithique pour obtenir une unité cryptographique à haut débit.

4. Méthode selon l'une des revendication précédentes, **caractérisée en ce qu'**elle consiste à :
- encrypter la clé publique du centre avec la clé de transport et la transmettre à destination de l'unité d'utilisateur (DEC)
- recevoir par l'unité d'utilisateur la clé publique encryptée et la transmettre au module de sécurité (SM),
- décrypter et stocker la clé publique par la clé de transport dans le module de sécurité (SM).

## Patentansprüche

1. Verfahren der Erzeugung und Verteilung von asymmetrischen öffentlichen und privaten Schlüsseln zwischen einem Schlüsselerzeugungszentrum und zumindest einer Benutzereinheit (DEC), die einen Sicherheitsmodul (SM) umfasst, wobei das Verfahren darin besteht:
- Zertifikate, die einen öffentlichen und einen privaten Schlüssel umfassen, in einer ersten kryptographischen Einheit (KPG) zu erzeugen,
- den privaten Schlüssel in der ersten kryptographischen Einheit (KPG) mit einem Dienstschlüssel zu verschlüsseln und ihn in einem Schlüsselspeicher (KPS) zu speichern,
- beim Versand von Schlüsseln an eine Benutzereinheit die Schlüssel aus dem Schlüsselspeicher (KPS) herauszuziehen und das Zertifikat mit dem öffentlichen Schlüssel zu bilden,
- den entsprechenden privaten Schlüssel in einem kryptographischen Sicherheitsmodul mit dem Dienstschlüssel zu entschlüsseln und ihn mit einem dem Benutzer eigenen Transportschlüssel zu verschlüsseln,
- den verschlüsselten privaten Schlüssel und das Zertifikat an den Benutzer zu übermitteln.

2. Verfahren nach Anspruch 1, **dadurch gekennzeichnet, dass** der verschlüsselte private Schlüssel von der Benutzereinheit (DEC) empfangen und zum Sicherheitsmodul (SM) übermittelt wird, der den Transportschlüssel enthält, um den privaten Schlüssel zu entschlüsseln und zu speichern.

3. Verfahren nach Anspruch 1, **dadurch gekennzeichnet, dass** es darin besteht, mehrere kryptographische Modulen als einen Block zu benutzen, um eine kryptographische Einheit hoher Leistung zu erhalten.

4. Verfahren nach einem der vorangehenden Ansprüche, **dadurch gekennzeichnet, dass** es darin besteht:
- den öffentlichen Schlüssel des Zentrums mit dem Transportschlüssel zu verschlüsseln und ihn zur Benutzereinheit (DEC) zu übermitteln,
- den verschlüsselten öffentlichen Schlüssel durch die Benutzereinheit zu empfangen und ihn an den Sicherheitsmodul (SM) zu übermitteln,
- den öffentlichen Schlüssel im Sicherheitsmodul (SM) mit dem Transportschlüssel zu entschlüsseln und zu speichern..

## Claims

1. A method of production and distribution of asymmetric public and private keys between a key generation centre and at least one user unit (DEC), said unit comprising a security module (SM), said method consisting in:
- generating certificates comprising a public key and a private key in a first cryptographic unit (KPG),
- coding the private key by means of a service key in the first cryptographic unit (KPG) and storing said private key in a key memory (KPS),
- when sending the keys to a user unit, extracting the keys from the key memory (KPS), composing the certification with the public key,
- decoding the corresponding private key by means of the service key in a cryptographic security module and coding it with a transport key of the user.

2. A method according to Claim 1, **characterised in that** the encrypted private key is received by the user unit (DEC) and transmitted to the security module (SM) containing the transport key for decoding and storing the private key.

3. A method according to Claim 1, **characterised in that** it consists in using several monolithic cryptographic unit to obtain a high speed coding module.

4. A method according to any of the preceding claims, **characterised in that** it consists in:
- coding the public key of the centre with the transport key and transmitting it to the user unit (DEC),
- receiving by the user unit, the encrypted public key and transmitting it to the security module (SM),
- decoding and storing the public key by means of the transport key inside the security module (SM).
